# DEMANDE DE BREVET EUROPEEN

(11) **EP 2 466 741 A1**
(43) Date de publication de la demande: **20.06.2012**
(21) Numéro de dépôt: 10015766.8
(22) Date de dépôt: 17.12.2010
(51) Int. Cl.: H02M 3/335

(54) **Micro-onduleur**

(71) Demandeur: Belenos Clean Power Holding AG, 2502 Bienne (CH)
(72) Inventeur: Toth, Antoine, 2800 Delémont (CH)
(74) Mandataire: Ravenel, Thierry Gérard Louis

(57) **Abrégé**

L'invention concerne un micro-onduleur pour un panneau solaire ayant deux bornes de sortie. Le micro-onduleur comprend un premier moyen de découplage connecté en parallèle aux bornes de sortie dudit panneau solaire, au moins deux blocs régulateurs (MPPT, Maximum Power Point Tracking) isolés galvaniquement et chacun connectés en sortie à des seconds moyens de découplage connectés en parallèle. La sortie des seconds moyens de découplage est connectée à un moyen de filtrage permettant l'adaptation de la tension de sortie du panneau solaire aux normes du réseau électrique basse tension. Le micro-onduleur comprend en outre un microcontrôleur commandant, par modulation de largeur d'impulsion, chaque bloc régulateur.

## Description

L'invention concerne un micro-onduleur notamment pour un panneau solaire photovoltaïque formé d'une pluralité de cellules photovoltaïques connectées en série ou une éolienne.

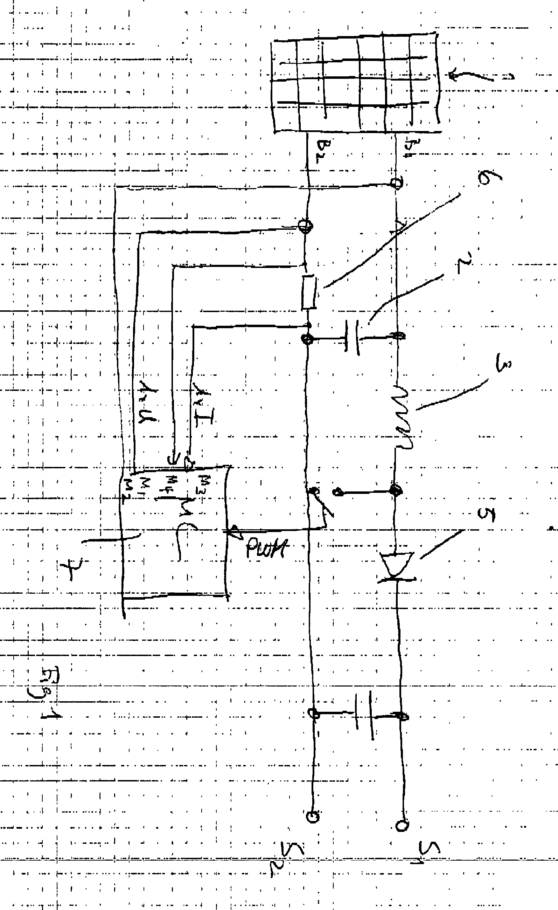

En se référant à la figure 1, un régulateur de tension pour panneau solaire 1 selon l'art antérieur. Ce régulateur de tension comprend une première borne B1 et une seconde borne B2 de sortie entre lesquelles une différence de potentiel est générée. Ce régulateur de tension comprend une capacité 2 montée en parallèle entre les bornes B1 et B2, une bobine 3 dont l'entrée est connectée à la borne B1, un transistor 4 dont une borne est connectée à la sortie de la bobine 3 et dont l'autre borne est connectée à la borne B2. Le régulateur de tension comprend en outre une diode 5 connectée par son entrée à la sortie de la bobine 3, ainsi qu'une résistance de shunt 6 connectée par son entrée à la borne B2. Le régulateur ce tension comprend également un microcontrôleur 7 qui mesure la tension du panneau solaire par deux entrées M1, M2 connectées respectivement aux bornes B1 et B2 et qui mesure le courant par deux entrées M3, M4 connectées aux bornes du shunt 6. Ce régulateur de tension présente deux bornes de sortie S1, S2. respectivement la borne de sortie de la diode 5 et la borne de sortie du shunt 6. Ce type régulateur de tension permet d'élever la tension et de faire travailler le panneau solaire à son point de puissance optimale indépendamment de l'illumination qu'il reçoit.

Pour un ensemble de panneaux solaires, les régulateurs de tension de chaque panneau solaire sont connectés en série pour fournir une tension de sortie continue transmise à un onduleur se chargeant de transformer la tension continue en tension alternative adaptée au réseau pour y être injectée.

Un premier inconvénient de ce type de régulateur réside dans le fait que la connexion en série impose une tension continue élevée nécessitant un câblage approprié, c'est-à-dire un câblage sécurisé. De plus, la mise en oeuvre de la connectique nécessite l'intervention d'un professionnel pour son installation ce qui est particulièrement coûteux.

Il est également connu d'associer à chaque panneau son propre onduleur, c'est-à-dire que chaque panneau solaire a son propre régulateur de tension qui fait travailler ledit panneau solaire à son point de puissance optimale. Chaque onduleur de ce système comprend un seul transformateur pour élever la tension à un niveau lui permettant d'être injectée dans le réseau. Ces onduleurs sont isolés galvaniquement du réseau électrique pour ne pas endommager les panneaux solaires, toutefois, il est connu de l'homme du métier qu'une telle solution entraîne en contrepartie une baisse du rendement.

Un inconvénient de cet agencement réside dans le fait que cet unique transformateur est parcouru d'un courant élevé, ce qui implique des pertes élevées.

Un autre inconvénient est que ce courant élevé nécessite d'utiliser des condensateurs électrolytiques coûteux et ayant une durée de vie largement plus faible que celle du panneau solaire auquel l'onduleur serait associé, ce qui est commercialement désavantageux

La présente invention a pour but de s'affranchir des inconvénients susmentionnés en fournissant un micro-onduleur fiable, peu couteux et dont la durée de vie est au moins équivalente à celle du panneau solaire auquel il est associé.

Cette invention a également pour but de fournir un micro-onduleur qui ne nécessite l'intervention d'un professionnel que lors du raccord au réseau et non lors de l'installation des panneaux solaires sur, par exemple, un toit, ce qui diminue considérablement le coût de l'installation.

A cet effet, l'invention concerne un micro-onduleur pour un panneau solaire ayant deux bornes de sortie. Le micro-onduleur comprend un premier moyen de découplage connecté en parallèle aux bornes de sortie dudit panneau solaire, au moins deux blocs régulateurs (MPPT: Maximum Power Point Tracking) isolés galvaniquement et chacun connectés en sortie à des seconds moyens de découplage connectés en parallèle. La sortie des seconds moyens de découplage est connectée à un moyen de filtrage permettant l'adaptation de la tension de sortie du panneau solaire aux normes du réseau électrique basse tension. Le micro-onduleur comprend en outre un microcontrôleur commandant, par modulation de largeur d'impulsion, chaque bloc régulateur.

Grâce à ses caractéristiques, le courant traversant chaque bloc régulateur est réduit d'un nombre égal au nombre de blocs régulateurs en parallèle, ce qui permet de réduire par quatre les pertes de conduction du bloc régulateur.

L'agencement du microcontrôleur au niveau du panneau solaire c'est-à-dire isolé galvaniquement du réseau électrique permet de ne pas consommer du courant en période nocturne lorsque le panneau solaire ne génère plus d'énergie.

De préférence, la commande des blocs régulateurs est décalée temporellement par ordre d'enclenchement dans une période de temps déterminée. Ceci permet d'augmenter d'un facteur quatre la fréquence vue par les seconds moyens de découplage. La conséquence est une possibilité de changer la technologie des seconds moyens de découplage et ainsi permettre l'utilisation de condensateur céramique ayant une plus grande durée de vie que les condensateurs électrolytiques conventionnellement utilisés. Ainsi, la durée de vie des seconds moyens de découplage peut être au moins égale à celle des panneaux solaires.

De préférence, ledit décalage temporel est commandé par la fréquence d'échantillonnage de la modulation de largeur d'impulsion.

De préférence, le microcontrôleur agit sur des moyens de commutation pour commander chaque bloc régulateur.

Avantageusement, le microcontrôleur comprend des moyens de mesure du courant traversant les moyens de commutation.

D'autre part, le microcontrôleur comprend des moyens de mesure de la tension d'entrée de chaque bloc régulateur.

Selon une variante, le microcontrôleur comprend en outre des moyens de mesure de la tension de sortie de chaque bloc régulateur.

Préférentiellement, les seconds moyens de découplage sont des condensateurs.

Avantageusement, les condensateurs sont du type céramique.

Dans une autre variante, le micro-onduleur comprend en outre un système de sécurité comprenant des moyens de coupure pour isoler la sortie dudit micro-onduleur du réseau électrique et arrêter la génération de la tension injectée au réseau électrique. Cet agencement a l'avantage de sécuriser l'installation solaire.

Avantageusement, les moyens de coupure comprennent un thyristor.

D'autres caractéristiques et avantages de la présente invention ressortiront plus clairement de la description détaillée qui suit d'un exemple de réalisation du micro-onduleur selon l'invention, cet exemple étant donné à titre purement illustratif et non limitatif seulement en liaison avec le dessin annexé sur lequel:
- la figure 1 déjà décrite représente un régulateur de tension selon l'art antérieur;
- la figure 2 représente un schéma bloc d'un mode de réalisation du micro-onduleur selon l'invention.

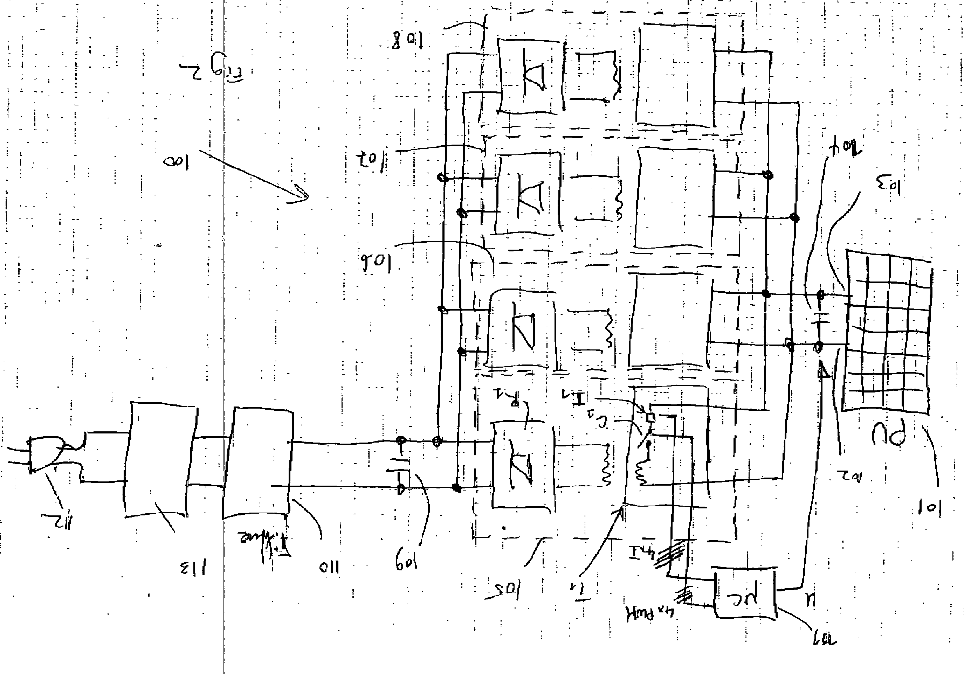

En se référant à la figure 2, on peut voir un micro-onduleur 100 pour un panneau solaire 101 ayant deux bornes de sortie 102, 103. Le micro-onduleur comprend un premier moyen de découplage 104 connecté en parallèle aux bornes de sortie 102, 103 dudit panneau solaire 101. Le micro-onduleur comprend quatre blocs régulateurs 105, 106, 107 et 108 (MPPT : Maximum Power Point Tracking) isolés galvaniquement et chacun connectés en sortie à des seconds moyens de découplage 109 connectés en parallèle. La sortie des seconds moyens de découplage 109 est connectée à un moyen de filtrage 110 permettant l'adaptation de la tension de sortie du panneau solaire 101 aux normes du réseau électrique basse tension. Le micro-onduleur 100 comprend en outre un microcontrôleur 111 commandant, par modulation de largeur d'impulsion, chaque bloc régulateur 105, 106, 107 et 108.

Chaque bloc régulateur 105, 106, 107 et 108 comprend un transformateur T1 en série avec des moyens de commutation C1 et un moyen de mesure de courant l1, le tout en parallèle au premier moyen de découplage 104. Chaque bloc régulateur 105, 106, 107 et 108 comprend en outre un redresseur R1 connecté en sortie du transformateur pour fournir une tension intermédiaire. Cette tension intermédiaire est envoyée au filtre 110 via les seconds moyens de découplage 109 de sorte à fournir une tension adaptée au réseau électrique basse tension 112.

Le microcontrôleur 111 commande les blocs régulateurs 105, 106, 107 et 108 via une commande décalée temporellement. En d'autres termes, les blocs régulateurs 105, 106, 107 et 108 sont commutés successivement dans une fenêtre temporelle déterminée.

Cette fenêtre est déterminée par la fréquence d'échantillonnage de la modulation de largeur d'impulsion (PWM).

Le microcontrôleur 111 agit sur les moyens de commutation C1 et assure ainsi la commande successive de chaque bloc régulateur 105, 106, 107 et 108. Par exemple, les moyens de commutation C1 comprennent un transistor FET.

En outre, le microcontrôleur 111 mesure le courant traversant les moyens de commutation C1 via le moyen de mesure de courant l1, par exemple une résistance ou tout autre moyen approprié (transformateur de courant, shunt, etc..).

D'autre part, le microcontrôleur 111 mesure la tension aux bornes du premier moyen de découplage 104. Ce premier moyen de découplage 104 est, par exemple, un condensateur tel que typiquement un condensateur céramique. Ce premier moyen de découplage 104 peut comprendre un ou plusieurs condensateurs en parallèle.

Ces mesures de tension et de courant permettent de rechercher la puissance maximum générée par le panneau solaire 101 pour optimiser la récupération de l'énergie générée par ce dernier.

Selon une variante non représentée, le microcontrôleur 111 comprend en outre des moyens de mesure de la tension de sortie de chaque bloc régulateur 105, 106, 107 et 108 pour contrôler que la tension intermédiaire ne dépasse pas une tension de seuil de fonctionnement déterminée.

Les seconds moyens de découplage 109 sont formés d'un ou plusieurs condensateurs céramiques en parallèle.

Dans l'exemple illustré, le micro-onduleur 100 comprend er outre un système de sécurité comprenant des moyens de coupure 113 pour isoler la sortie dudit micro-onduleur 100 du réseau électrique 112 et arrêter la génération de la tension injectée au réseau électrique 112.

Ces moyens de coupure 113 comprennent typiquement un thyristor mais on pourra prévoir l'utilisation d'autres moyens de coupure 113 comme un relais.

Selon une variante non représentée, on peut intercaler entre les seconds moyens de découplage 109 et le filtre 110, un pont en H (quatre commutateurs comprenant deux commutateurs en série et deux commutateurs en parallèle). Ce pont en H génère un courant sinusoïdal) qui sera injecté au réseau. Le filtre 110 permet de supprimer les harmoniques générées par ce point en H.

## Revendications

1. Micro-onduleur pour un panneau solaire ayant deux bornes de sortie comprenant un premier moyen de découplage connecté en parallèle aux bornes de sortie dudit panneau solaire, au moins deux blocs régulateurs isolés galvaniquement et chacun connectés en sortie à des seconds moyens de découplage connectés en parallèle, la sortie des seconds moyens de découplage étant connectée à un moyen de filtrage permettant l'adaptation de la tension de sortie du panneau solaire aux normes du réseau électrique basse tension, ledit micro-onduleur comprenant en outre un microcontrôleur commandant, par modulation de largueur d'impulsion, chaque bloc régulateur.

2. Micro-onduleur selon la revendication 1, **caractérisé en ce que** le microcontrôleur est agencé pour que la commande des blocs régulateurs soit décalée temporellement par ordre d'enclenchement dans une période de temps déterminée.

3. Micro-onduleur selon la revendication 2, **caractérisé en ce que** ledit décalage temporel est commandé par la fréquence d'échantillonnage de la modulation de largeur d'impulsion.

4. Micro-onduleur selon l'une des revendications 1 à 3, **caractérisé en ce que** le microcontrôleur agit sur des moyens de commutation pour commander chaque bloc régulateur.

5. Micro-onduleur selon la revendication 4, **caractérisé en ce que** le microcontrôleur comprend des moyens de mesure du courant traversant les moyens de commutation.

6. Micro-onduleur selon les revendications 4 ou 5, **caractérisé en ce que** le microcontrôleur comprend des moyens de mesure de la tension d'entrée de chaque bloc régulateur.

7. Micro-onduleur selon l'une des revendications 4 à 6, **caractérisé en ce que** le microcontrôleur comprend en outre des moyens de mesure de la tension de sortie de chaque bloc régulateur.

8. Micro-onduleur selon l'une des revendications précédentes, **caractérisé en ce que** les seconds moyens de découplage sont des condensateurs.

9. Micro-onduleur selon la revendication 8, **caractérisé en ce que** les condensateurs sont du type céramique.

10. Micro-onduleur selon l'une des revendications précédentes, **caractérisé en ce qu'**il comprend en outre un système de sécurité comprenant des moyens de coupure pour isoler la sortie dudit micro-onduleur du réseau électrique.

11. Micro-onduleur selon la revendication 10, **caractérisé en ce que** les moyens de coupure comprennent un thyristor.
